# EUROPEAN PATENT SPECIFICATION

(11) **EP 1 138 999 B1**
(45) Date of publication and mention of the grant of the patent: **21.04.2004**
(21) Application number: 01200883.5
(22) Date of filing: 09.03.2001
(51) Int. Cl.: F16L 21/04, F16L 21/08

(54) **Coupling device and method for fabricating a grip ring to be used in such a coupling device**
Kupplungsvorrichtung und Verfahren zum Herstellen eines Greifrings und seine Anwendung bei einer solchen Vorrichtung
Dispositif d'accouplement et procédé de fabrication d'un anneau coupant et application au dispositif

(30) Priority: 27.03.2000 NL 1014758
(43) Date of publication of application: 04.10.2001
(73) Proprietor: Georg Fischer WAGA N.V., 8161 PA Epe (NL)
(72) Inventor: Hulsebos, Michel Paul, 7421 DD Deventer (NL)
(74) Representative: Van Breda, Jacobus

(56) References cited:
- EP-A- 0 738 850
- EP-A- 0 794 378
- DE-C- 19 823 181
- NL-C- 1 009 734

## Description

The present invention relates to a coupling device for a pipe, comprising a sleeve having an insert end for the pipe and a sealing means suitable for realising a seal around the pipe inserted in the sleeve, said sealing means comprising a plurality of mutually slidable elements which together form a ring, and a grip ring being mounted inside said elements and extending along at least a part of the circumference of the pipe.

Such a coupling device is disclosed in the European patent application EP-A-0 794 378 assigned to the present applicant. The prior art coupling device is used for pipes made of steel, stainless steel, eternite, cast-iron, coated steel, PVC, polyethylene and asbestos cement, and is used for coupling two such pipes. It is of importance that on the one hand the coupling device provides an adequate seal and that on the other hand said coupling device is able to withstand tensile strain. This latter function is provided by the grip ring that is part of the prior art coupling device.

From the Dutch patent application 1009734 to applicant a coupling device is known that is embodied with a grip ring having projections that are pressed out of the surface of the grip ring and that extend substantially radially inwards from the surface of the grip ring. At one side the projections then are delimited by slit-like openings punched out of the grip ring. A problem with the known grip ring that is part of such a coupling device is, that when using the coupling device on pipes that are made of a softer material, the grip ring seems to have the effect of a cheese slicer, with the result that the tensile strength of the coupling device according to the prior art is relatively limited. When the coupling device according to the prior art is used with such softer materials as polyethylene, polybutene, acryl butadiene styrene, or polyproylene, a tensile strain of approximately 6 to 7 bars may apply in the large diameters, and in the smaller diameters this may be 15 to 16 bars.

It is the object of the invention to modify the grip ring such as to improve these values. In accordance with the invention this is achieved by embodying the grip ring with projections having a double wedge shape, the two wedge shaped portions being positioned in each other's extended direction with their low sides abutting. In accordance with the form thus conferred on the projections, they substantially follow the periphery of the pipe to be clamped, while also providing a relatively large contact surface with which the projections clamp the pipe. The height of the projections necessary may be a mere 1 mm maximally, so that the depth of penetration into the pipe is kept very much to a limit. Moreover, it is a "restricted" penetration; the projections do not make an undesirable radial notch in the pipe. It has been shown that when the coupling device according to the invention is applied to such a pipe made of a relatively soft material and having a diameter of 200 mm, it tolerates a tensile strain of 25 to 30 bars, whereas in the prior art this value is 6 to 7 bars.

Preferably the projections are pressed out of the surface of the grip ring and are formed such that, viewed in the circumferential direction of the grip ring indicated with arrow A, each projection has rims extending inwardly over a first distance B and delimiting said projections and has a portion positioned between said rims and extending inwardly over a second distance C, which second distance C is smaller than the first distance B. This provides a set of substantially symmetrically formed projections with the result that the grip characteristic is invariant with regard to the direction of any possible rotational strain the pipe may exert on the coupling device.

The clamping action of the coupling device according to the invention is furthered especially by holes provided on the grip ring, said holes in the longitudinal direction being delimited on either side by the projections.

The invention is also embodied in a method for the fabrication of a grip ring suitable to be used in a coupling device according to the invention, characterized in that angular holes are punched into a plate, and in that subsequently directly adjacent, at opposite sides of the holes, the rims delimiting the holes are bent, followed by shaping the plate into at least a partial ring form.

The invention will be further elucidated with reference to the drawing, which
in Fig. 1 shows an exploded view of the coupling device according to the invention; and
in Fig. 2 shows a partial view in perspective of the grip ring, which is part of the coupling device according to the invention.

Similar parts in the figures carry the same reference numbers.

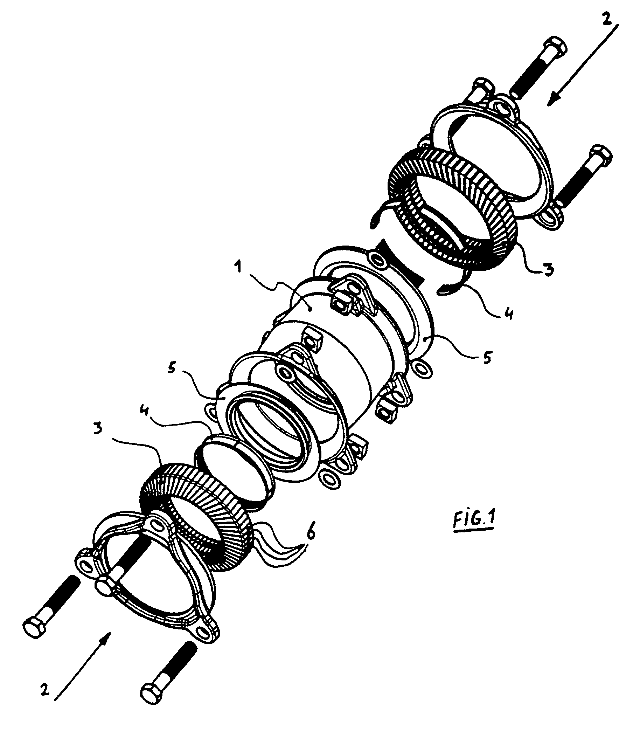

Referring first to Fig. 1, the coupling device is shown in an exploded view and comprises a sleeve 1 having an insert end 2 for a pipe which is not shown, and a sealing means 3, 4, 5 suitable for realising a seal around the pipe inserted in the sleeve 1, said sealing means 3, 4, 5 comprising a plurality of mutually slidable elements 6 which together form a ring 3, and a grip ring 4 being mounted in said elements 6 and extending along at least a part of the circumference of the pipe, said grip ring 4 being formed with projections pressed out of the surface of the grip ring, and extending substantially radially inwards. For a further description of the coupling device reference is made to EP-A-0 794 378 which is considered to be inserted herein.

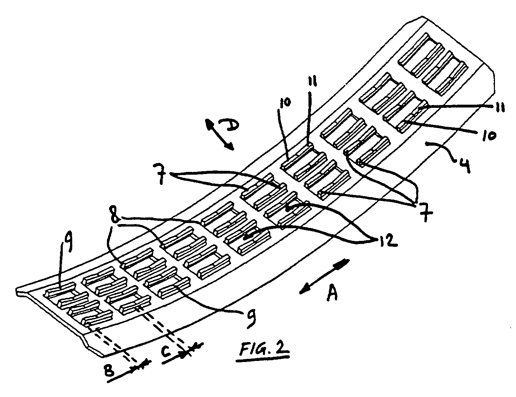

With reference to Fig. 2, the embodiment of the grip ring 4 is further elucidated. As already mentioned, the grip ring 4 is embodied with projections 7 pressed out of the surface of the grip ring and extending substantially radially inwards. As clearly shown in Fig. 2, the projections 7 are pressed out of the surface of the grip ring 4 and are formed such that, viewed in the circumferential direction of the grip ring indicated with arrow A, each projection has rims 8 extending inwardly over a first distance B and delimiting said projections 7, and has a portion 9 positioned between said rims 8 and extending inwardly over a second distance C, the second distance C being smaller than the first distance B. More specifically and preferably as shown in Fig. 2, the projections 7 are embodied with a double wedge shape such that the two wedge shaped portions 10 and 11 are positioned in each other's extended direction and their lower sides abut in the portion 9 between the rims 8. Figure 2 also clearly shows that the grip ring 4 is provided with holes 12, which holes 12 in the longitudinal direction indicated with arrow D, are limited at either side by the projections 7. The grip ring may be fabricated from various materials. Preferably, however, the grip ring 4 is made of stainless spring steel having a tensile strength of at least 1200 N/mm² and preferably ranging approximately from 1400 to 1600 N/mm². However, the grip ring is already fully effective when it has the above-mentioned tensile strength of 1200 N/mm². According to the invention, the grip ring 4 is preferably fabricated such that angular holes 8 are punched in preferably a stainless steel plate, strip or band, and that subsequently directly adjacent the holes at opposite sides, the rims delimiting the holes are bent, which bent rims then serve as the above-described projections of the grip ring 4. The plate is then shaped into a ring, which is adjusted to the diameter of the coupling device in which it is used.

## Claims

1. A coupling device for a pipe, comprising a sleeve having an insert end for the pipe and a sealing means suitable for realising a seal around the pipe inserted in the sleeve, said sealing means comprising a plurality of mutually slidable elements which together form a ring, and a grip ring being mounted within said elements and extending along at least a part of the circumference of the pipe, which grip ring (4) has projections (7) that extend substantially radially inwards from the surface of the grip ring, **characterized in that** the projections (7) have a double wedge shape, the two wedge shaped portions being positioned in each other's extended direction with their low sides (9) abutting, and the wedge shaped portions extending in the circumferential direction of the grip ring.

2. A coupling device according to claim 1, **characterized in that** the projections(7) are pressed out of the surface of the grip ring (4) and are formed such that, viewed in the circumferential direction of the grip ring indicated with arrow A, each projection has rims (8) extending inwardly over a first distance (B) and delimiting said projections (7) and has a portion (9) positioned between said rims (8) and extending inwardly over a second distance (C), which second distance (C) is smaller than the first distance (B).

3. A coupling device according to on of the preceding claims, **characterized in that** holes (12) are provided on the grip ring (4), said holes (12) in the longitudinal direction being delimited on either side by the projections.

4. A method for fabricating a grip ring suitable to be used in a coupling device according to any one of the claims 1-3, **characterized in that** angular holes are punched into a plate, and **in that** subsequently, directly adjacent at opposite sides of the holes, the rims delimiting the holes are bent, followed by shaping the plate into at least a partial ring form.

## Patentansprüche

1. Kupplungsvorrichtung für ein Rohr, mit einer Hülse, die ein Einsetzende für das Rohr und eine Dichteinrichtung besitzt, die zur Realisierung einer Dichtung um das in die Hülse eingesetzte Rohr geeignet ist, wobei die Dichteinrichtung zahlreiche wechselseitig gleitend verschiebbare Elemente, die zusammen einen Ring bilden, und einen Greifring aufweist, der innerhalb der Elemente montiert ist und sich längs wenigstens eines Abschnitts des Umfangs des Rohres erstreckt, wobei der Greifring (4) Anformungen (7) aufweist, die sich im wesentlichen radial von der Oberfläche des Kreisrings nach innen erstrecken,
**dadurch gekennzeichnet, daß** die Anformungen (7) eine Doppelkeilform aufweisen, wobei die beiden keilförmig gestalteten Abschnitte in ihrer Ausdehnungsrichtung mit ihren niedrigen Seiten (9) anliegend positioniert sind und wobei sich die keilförmig gestalteten Abschnitte in der Umfangsrichtung des Greifrings erstrecken.

2. Kupplungsvorrichtung nach Anspruch 1, **dadurch gekennzeichnet, daß** die Anformungen (7) aus der Oberfläche des Greifrings (4) herausgepreßt und derart geformt sind, daß, in Umfangsrichtung des Greifrings gesehen, wie durch den Pfeil A angegeben, jede Anformung nach außen umgebogene Ränder (8), die sich über eine erste Entfernung (B) erstrecken und die Anformung (7) begrenzen, und einen Abschnitt (9) besitzt, der zwischen den nach außen umgebogenen Rändern (8) angeordnet ist und sich nach innen über eine zweite Entfernung (C) erstreckt, wobei die zweite Entfernung (C) kleiner als die erste Entfernung (B) ist.

3. Kupplungsvorrichtung nach einem der vorangehenden Ansprüche, **dadurch gekennzeichnet, daß** auf dem Greifring (4) Löcher vorgesehen sind, die in der Längsrichtung an jeder Seite durch die Anformungen begrenzt sind.

4. Verfahren zur Herstellung eines Greifrings zur Verwendung in einer Kupplungsvorrichtung gemäß einem der vorherigen Ansprüche 1 bis 3, **dadurch gekennzeichnet, daß** in eine Platte winklige Löcher gestanzt werden und daß danach direkt angrenzend an die gegenüberliegenden Seiten der Löcher die nach außen umgebogenen Ränder, die die Löcher begrenzen, gebogen werden, wonach ein Gestalten der Platte in wenigstens einer Teilringform erfolgt.

## Revendications

1. Dispositif d'accouplement pour un tuyau, comprenant un manchon possédant une extrémité formant insert pour le tuyau et des moyens d'étanchéité convenant pour établir une étanchéité autour du tuyau et insérés dans le manchon, lesdits moyens d'étanchéité comprenant une pluralité d'éléments coulissant les uns par rapport aux autres et qui forment conjointement un anneau, et un anneau de saisie monté dans lesdits éléments et s'étendant le long d'au moins une partie de la circonférence du tuyau, lequel anneau de saisie (4) comporte des parties saillantes (7) qui s'étendent essentiellement radialement vers l'intérieur à partir de la surface de l'anneau de saisie, **caractérisé en ce que** les parties saillantes (7) possèdent une forme en coin double, les deux parties en forme de coin étant positionnées l'une dans la direction étendue de l'autre avec leurs côtés bas (9) en aboutement, et les parties en forme de coin s'étendant dans la direction circonférentielle de l'anneau de saisie.

2. Dispositif d'accouplement selon la revendication 1, **caractérisé en ce que** les parties saillantes (7) sont pressées de manière à ressortir de la surface de l'anneau de saisie (4) et sont formées de telle sorte que, vu dans la direction circonférentielle de l'anneau de saisie indiqué par la flèche A, chaque partie saillante comporte des rebords (8), qui s'étendent vers l'intérieur sur une première distance (B) et délimitent lesdites parties saillantes (7), et possède une partie (9) positionnée entre lesdits rebords (8) et s'étendant vers l'intérieur sur une seconde distance (C), laquelle seconde distance (C) est inférieure à la première distance (B).

3. Dispositif d'accouplement selon l'une des revendications précédentes, **caractérisé en ce que** des trous (12) sont prévus dans l'anneau de saisie (4), lesdits trous (12) dans la direction longitudinale étant délimités des deux côtés par les parties saillantes.

4. Procédé pour fabriquer un anneau de saisie convenant pour être utilisé dans un dispositif de couplage selon l'une quelconque des revendications 1 à 3, **caractérisé en ce qu'**on forme par poinçonnage des trous angulaires dans une plaque, et **en ce qu'**ensuite on replie les rebords délimitant les trous, directement dans une position adjacente sur les côtés opposés des trous, ceci étant suivi par une mise en forme de la plaque pour l'amener sous une forme d'anneau au moins partiel.
